# EUROPEAN PATENT APPLICATION

(11) **EP 3 659 767 A1**
(43) Date of publication of application: **03.06.2020**
(21) Application number: 18460081.5
(22) Date of filing: 21.12.2018
(51) Int. Cl.: B27G 13/04

(54) **METHOD OF SEATING A KNIFE IN A HEAD WITH REPLACEABLE KNIVES**

(30) Priority: 27.11.2018 PL 42793218
(71) Applicant: P.H.M. POLCOMM Dariusz Kozak, 21-100 Libartów (PL)
(72) Inventor: Karski, Rafal, 30-399 Kraków (PL)
(74) Representative: Wozniak, Jolanta

(57) **Abstract**

The method of seating a knife in a head body with replaceable carbide knives is characterised in that the knife (1) is pressed to the body (2) with the clamp (5) using at least one set screw (4) which presses onto a retaining pin (3). The retaining pin (3) is set in a manner enabling the centrifugal force acting on the clamp (5) to increase the force with which the knife (1) is pressed to the body (2). The set screw (4) is placed in the clamp (5) and screwed with a wrench routed through the tube hole (6). The retaining pin (3) is necessary only for aluminium bodies, as there is a risk that the contact place of the set screw (4) and body (2) will deform during cutter operation, which decreases the holding down force. The tube (6) also protects the cutter against disengagement in emergencies. In solutions with a protective groove in the knife or seat pocket, the tube is not required. The vertical cutter positioning (1) is achieved using the base surface of the seat pocket bottom, however, the horizontal positioning is achieved through grinding a gap (9) in the knife (1) and placing a pin (8) in the head body seat pocket.

## Description

The subject-matter of the invention is a method of seating a knife in a head with replaceable knives whose intended use is, in particular, high-performance machining of, in particular, objects made of demanding materials, in the field of wood and plastic machining. Milling heads with cutting knives featuring straight edges are generally used to mill flat surfaces. In such heads, a cutting edge is located in parallel to the head rotation axis. Sectional profiles as well as convex profiles similar to circular profiles are mostly milled using heads with replaceable knives featuring cutting edges adjusted to the shape being milled. Machining by means of such milling cutters is inconvenient as each change of a profile requires replacing a milling cutter. Thus, for profiling, heads with milling cutters featuring straight cutting edges are used more and more frequently as these edges are located diagonally in relation to the head rotation axis, and the profile shape depends on the angle at which the edge is located in relation to the axis.

The EP0158604 European patent description provides an element with a simplified mechanism and flexible elements anchoring a machining cutting knife in a head. Application of the mechanism results in eliminating separators normally used on pins connecting various kinematic elements. The external anchoring elements comprise longitudinal ridges consisting of rigid sawtooth-shaped elements which come off the shape after flattening, thanks to the internal recess running along the surface walls, immediately below the longitudinal ridges.

The CN86310418 Chinese patent description provides a utility model presenting an automatic wood milling machine with three milling cutters for machining of wooden floor elements. This device belongs to the carpentry machinery group. In comparison to the existing wood milling machine, the design of the automatic wood milling machine with three milling cutters for wooden floor element machining features a larger milling cutter stand and lower table equipped with cutters. The automatic wood milling machine with three milling cutters for wooden floor element machining comes with a guiding groove for material feeding, guiding grove for material unloading and automatic mechanism feeding materials from a chain wheel and material stand. The upper and side pressure wheels are located in the guiding groove for material feeding and guiding groove for material unloading, which can ensure smooth passage of wood material through the machining process performed by three milling cutters, and the groove, pin and lower groove facilitate machining of wood with a single pass. Automatic flow line manufacturing is performed. The automatic wood milling machine with three milling cutters for wooden floor element machining can also process plastic products of analogous demands.

On the other hand, the P.415962 patent description provides a multifunction lathe head facilitating simultaneous performance of three operations, e.g. facing, milling and providing a groove under a thrust ring. The head comes with guides for individual machining sections located in a cylindrical body, with a machining tool fixture, and all sections are coupled with one another via a mechanical connection featuring a driving ring moving perpendicularly to a section axis. Power is transmitted by mating tapered surfaces of various inclination angles for individual sections so that the tool feed for each section is provided at various linear speeds.

The Italian Omas company manufactures heads in which cutter holders are mounted in a rotational and adjustable manner to allow for machining at various angles, however, milled surfaces must always be flat. This head must not be used to machine sectional profiles similar to circular profiles and circular profiles themselves. In order to machine such profiles, a milling cutter with a straight cutting edge must be replaced with a milling cutter with a sectional cutting edge. Similarly, the milling head for process chip machining provided in the Polish PL 108 645 patent description only machines flat surfaces. In this head, cutter plates are fixed in an adjustable manner in relation to the tool body by means of a replaceable holder seated rotationally in the body and fixed with a clamp. The straight cutting edges of cutter plates create a taper and are located at the 0° - 45° angle in relation to the tool base. When the working cutting edge is set tangentially to the surface being machined, the head rotation axis is inclined in relation to the surface being machined at an angle equal to the cutting edge setting angle, as a result of which this edge determines a hyperbolic curve in the feed plane. However, only convex surfaces similar to circular ones can be machined with the head with the Polish protection right no. PL 37 729. In this head, the straight cutting edge is located diagonally in relation to the rotation axis, within a specified distance from this axis. The rotation provides a hyperboloid surface of cutting edge operation creating a profile of a convex shape similar to a circular one. The radius of this surface is determined by the distance between the cutting edge and head rotation axis. The head design facilitates modification of this distance, without any technical problems. However, this head cannot be used for flat surface machining.

The subject matter of this invention is to design such a method of knife seating in a head that will facilitate location of a set screw in a place not being subject to contamination with machined material residues (chips, resin, adhesive) and will not require positioning of a clamp in the body, and will facilitate easy adjustment of the system to special plates handling.

The essence of this solution consists in the fact that a set screw is used in the clamp located at the front of the cutting edge. This screw is turned through the hole located at the back of the cutting edge. The opening for turning the screw comes with a fixed tube and the clamp is pressed to a pin or body.

A beneficial solution consists in a fact that knife is pressed to the body with a clamp through at least one set screw in the clamp located at the front of the cutter which is pressed to a retaining pin or the body, in the version with grooves, but without retaining pins.

A beneficial solution consists in a fact that the retaining pin is set in a position that enables the centrifugal force acting on the clamp to increase the pressure of the knife on the body.

A beneficial solution consists in a fact that the set screw is located in the clamp and turned using a wrench from the back of the cutting edge, routed through tube hole.

The cutter is seated in the seat pocket using the seating surface, vertically, and the seating pin. The head characteristics include enhanced durability and decreased noise level. The benefits of the solution in line with the invention include the possibility of using commercially available carbide knives, easy modification of the system to support special plates, possibility to use commercially available screws, easy modification of screws (6kt torx seat, fine thread), low clamp weight, easy manufacturing of clamps, possibility to manufacture spare parts, easy manufacturing of sectional clamps and clamps with an axial angle. The fact that it is not necessary to position the clamp in the body is also an advantage. Moreover, the sharpening compensation system development is also possible.

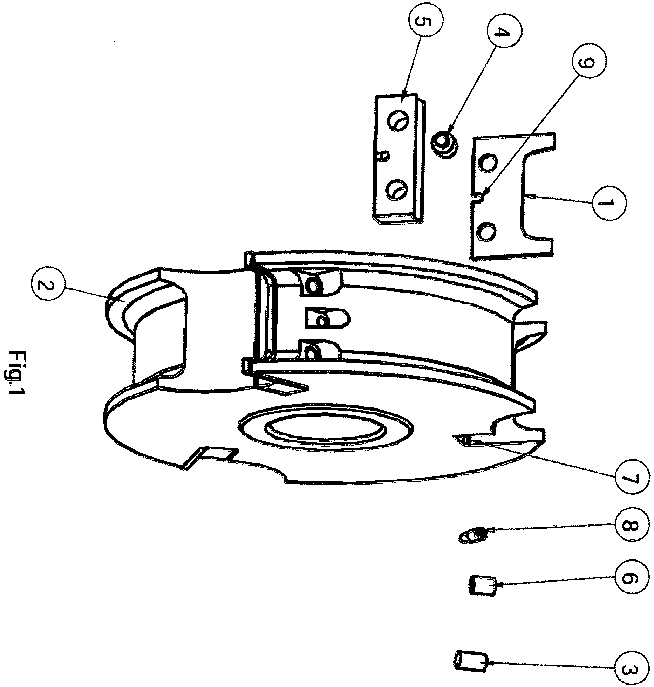

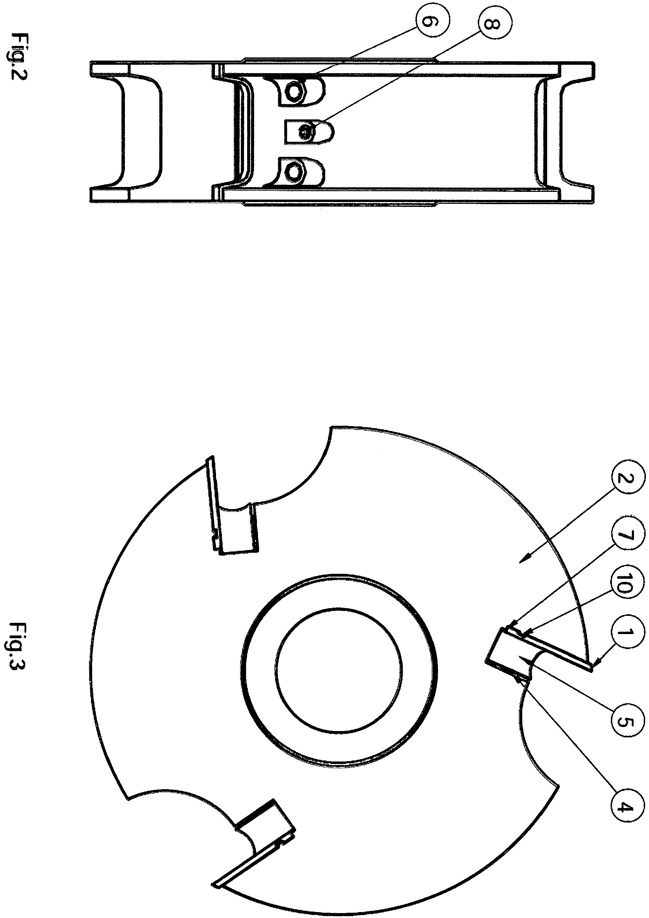

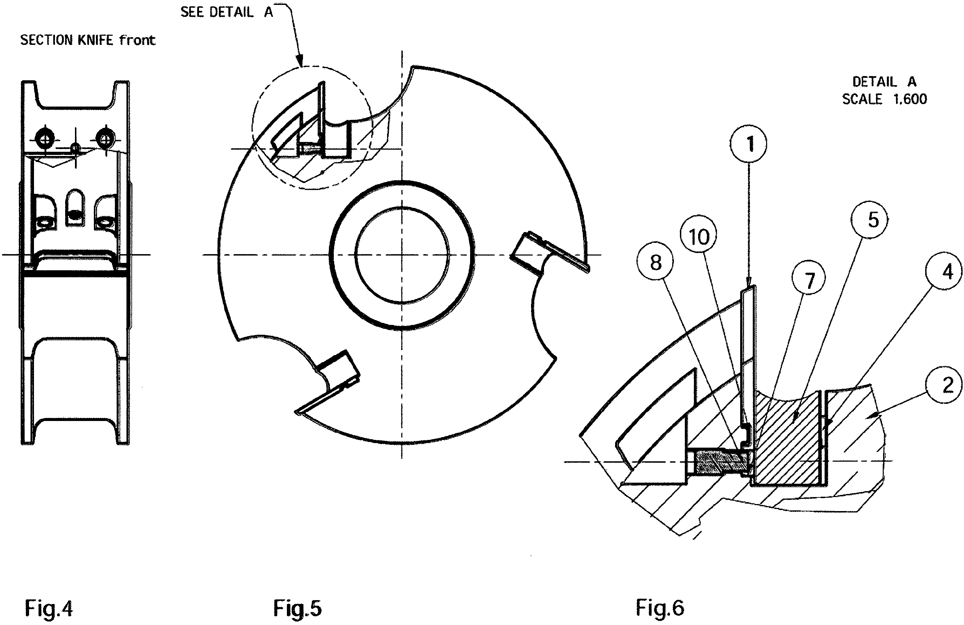

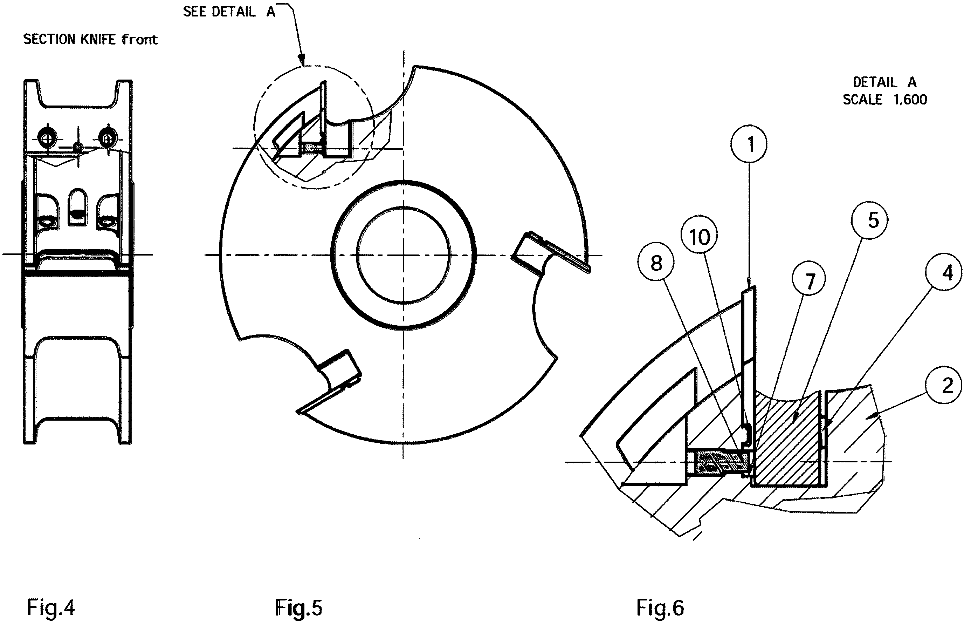

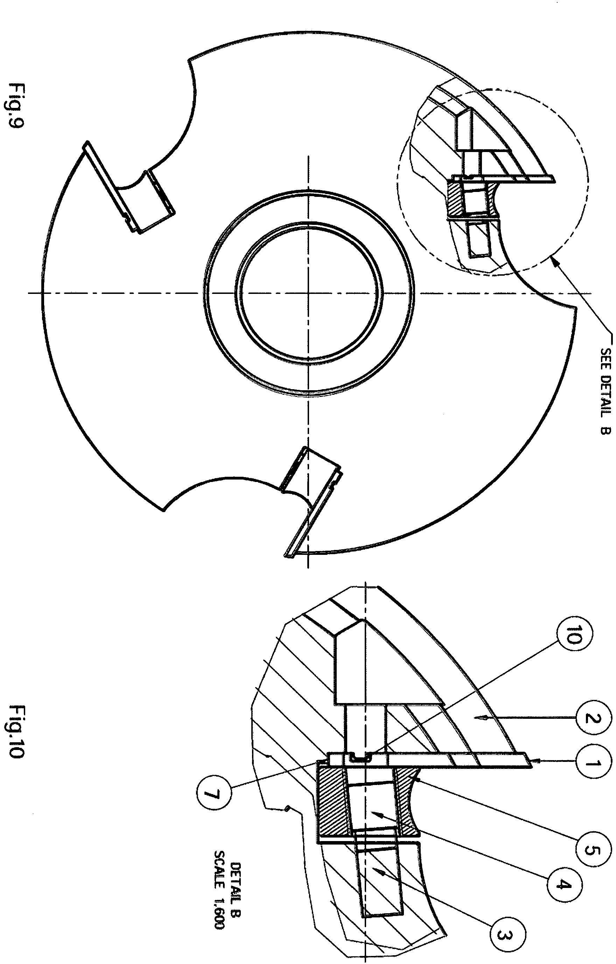

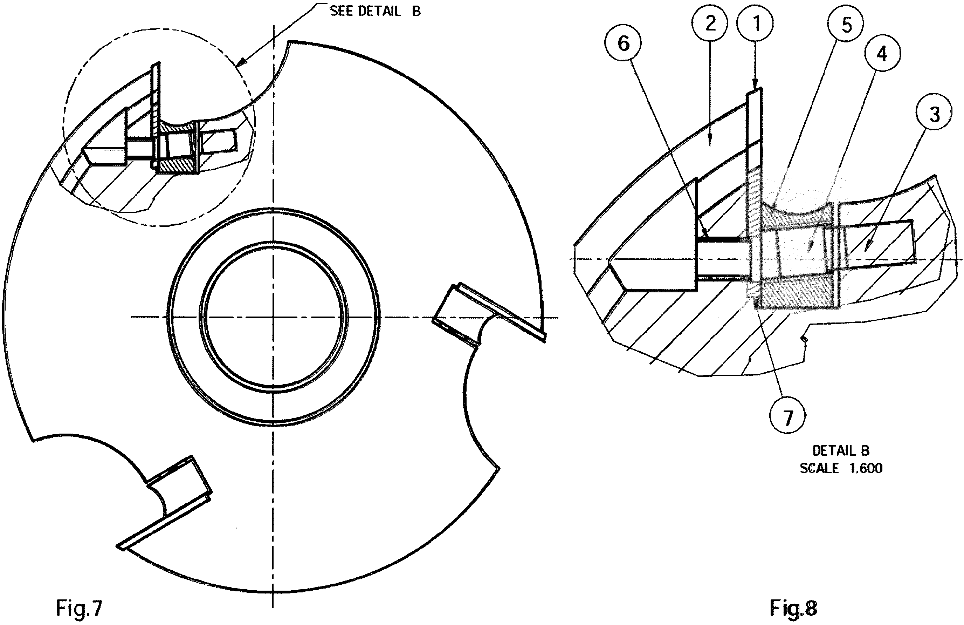

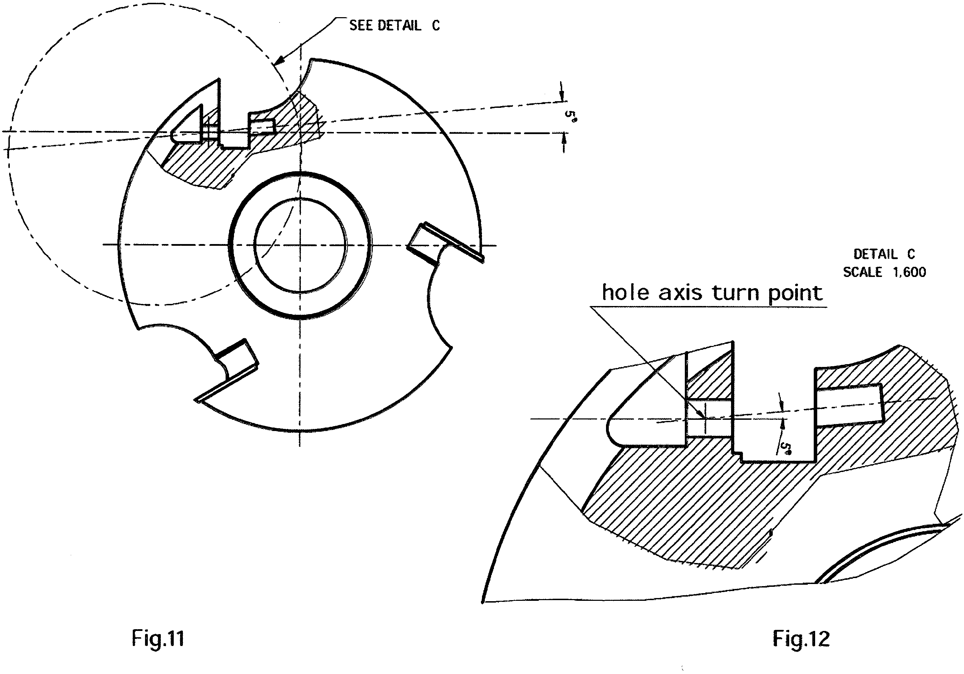

An example of the subject matter of the invention is shown in the illustration in which: fig. 1 shows the milling head, in the side perspective view, fig. 2 shows the head, in the front view, fig. 3 shows the head, in the side view, fig. 4 shows the head, in the front view, fig. 5 shows the head, in the side view, fig. 6 shows the cross-section of seating elements, fig. 7 and 8 show the cross-section of pressure and seating elements in the head version with a tube (6) acting as a protective measure, fig. 9 and 10 show the cross-section of pressure and seating elements in the head version with a groove (10) acting as a protective measure, fig. 11 and 12 show, in the cross-section, the cutter head seating hole axis turn point.

The cutter is seated in the head according to the following procedure: the knife (1) is pressed to the head body (2) with the clamp (5) via the set screw (4) which presses onto the retaining pin (3).

The retaining pin (3) is necessary only for aluminium bodies, as there is a risk that the contact place of the set screw (4) and body (2) will deform during cutter operation, which decreases the holding down force.

The retaining pin (3) is set in a manner enabling the centrifugal force acting on the clamp (5) increase the force with which the cutter (1) is pressed to the body (2).

At least one set screw (4) is placed in the clamp (5) and screwed with a wrench routed through the tube hole (6).

In the solution presented in the example, the tube (6) also protects the cutter against disengagement in emergencies.

In solutions with a protective groove (10) in the knife (1) or seat pocket, the tube (6) is not required. This solution is easier to manufacture, however, it requires using more expensive knives.

The vertical cutter positioning (1) is achieved using the base surface of the seat pocket bottom, however, the horizontal positioning is achieved through grinding a gap (9) in the knife (1) and placing a pin (8) in the head body seat pocket.

See the tables below for results of tests conducted with aluminium heads in which a knives have been seated in line with the solution included in this invention.

**Test 1: 9000 n/-1 aluminium head, time 2 minutes (measurement of individual cutting edge diameters)**

| Date: | 2018-01-16 | | |
|---|---|---|---|
| | G | S | D |
| Z1. before | 120.078 | 100.247 | 120.021 |
| Z1. after | 120.080 | 100.250 | 120.024 |
| | | | |
| Z2. before | 120.117 | 100.291 | 120.076 |
| Z2. after | 120.123 | 100.294 | 120.078 |
| | | | |
| Z3. before | 120.077 | 100.068 | 120.053 |
| Z3. after | 120.078 | 100.269 | 120.055 |

**Test 2: □ 160, 9000 n/-1 aluminium head, time 2 minutes (measurement of individual cutting edge diameters)**

| Date: | 26/01/2018 | | |
|---|---|---|---|
| | G | S | D |
| Z1. before | 159.960 | 140.062 | 160.010 |
| Z1. after | 159.964 | 140.060 | 160.012 |
| Z2. before | 159.972 | 140.074 | 160.020 |
| Z2. after | 159.976 | 140.072 | 160.020 |
| | | | |
| Z3. before | 160.014 | 140.100 | 160.042 |
| Z3. after | 160.015 | 140.098 | 160.040 |

## Claims

1. The method of seating knife in a head body with replaceable carbide knives **characterised in that** the knife (1) is pressed to the body (2) with the clamp (5) located at the front of the cutting edge, which is turned through hole of the tube (6) using at least one set screw (4) which presses onto a retaining pin (3).

2. The method, according to claim 1, **characterised in that** the retaining pin (3) is set in a manner enabling the centrifugal force acting on the clamp (5) to increase the force with which the knife (1) is pressed to the body (2).

3. The method, according to claim 1, **characterised in that** the set screw (4) is located in the clamp (5) and screwed with a wrench from the back of the cutting edge (1), routed through hole of the tube (6).

4. The method, according to claim 1, **characterised in that** the vertical knife positioning (1) is achieved using the base surface of seat pocket bottom, however, the horizontal positioning is achieved through grinding a gap (9) in the knife (1) and placing a pin (8) in the head body seat pocket.
